# EUROPEAN PATENT SPECIFICATION

(11) **EP 2 056 953 B1**
(45) Date of publication and mention of the grant of the patent: **05.06.2013**
(21) Application number: 07785744.9
(22) Date of filing: 20.08.2007
(51) Int. Cl.: B01D 46/24

(54) **A FILTER INLET**
FILTEREINLASS
ORIFICE D'ADMISSION DE FILTRE

(30) Priority: 21.08.2006 DK 200601088; 04.10.2006 DK 200601284
(43) Date of publication of application: 13.05.2009
(73) Proprietor: Simatek A/S, 4270 Höng (DK)
(72) Inventor: JENSEN, Ame, Gronbaek, DK-4480 St. Fuglede (DK); ANDERSEN, Christian, Dan, DK-4270 Hong (DK)
(74) Representative: Zacco Denmark A/S
(86) International application number: PCT/DK2007/000380
(87) International publication number: WO 2008/022639

(56) References cited:
- EP-A- 0 343 061
- US-A1- 2004 055 470

## Description

The invention relates to a filter comprising a filter housing with an essentially horizontal partition wall dividing the filter housing into a clean-gas chamber and a dust-gas chamber, said partition wall being provided with a number of openings wherein a plurality of filter elements are arranged that are secured to the partition wall and extends downwards into the dust chamber, which filter is provided with an inlet part in open communication with the dust chamber, said inlet part being configured for supplying a dust-containing flow of gas to the dust chamber, said gas flow being conveyed through the filter elements and upwards into the clean-gas chamber, from where the filtered gas is discharged through a clean-gas outlet, and in the filter housing, a cylindrical inner portion is arranged that encircles the filter elements at least across a part of the length of the filter elements; and in that, on the filter housing opposed to the area where the cylindrical inner part is arranged, a round-going inlet part is configured, which inlet part has a larger diameter than at least a portion of the filter housing that adjoins the inlet part.

Such filters are commonly known. The filter elements that are inserted into the filter may for instance be in the form of filter bags. Typically, the filter bags each comprises a wire cage on which a bag of filter material is mounted. The filter bags are suspended from a horizontal partition wall and extend downwards into a dust chamber to which the dust-containing gas or air is supplied and conveyed upwards across the partition wall through the filter bags. Hereby the dust particles deposit on the filter bag and drop down to the bottom of the filter housing from where they can be removed.

The same applies when other types of filter elements are used, be it bag filters, as mentioned, but other filters may also be concerned where filter material is attached to a kind of holder means. For instance, they may be filter cartridges, but any suitable filter material can be used.

When the dust-containing gas is supplied to the dust chamber opposed to the filter elements, a certain wear occurs on the filter elements, in particular the filter elements that are located most proximate the inlet. It was attempted to solve the problem of wear in Danish patent No. 175107 B1 by arranging a number of diffuser elements in the inlet part outside the filter housing, see patent disclosure DK 175107 B1.

However, the solution has a limitation with respect to the amount of product taken through the filter. In case of large amounts of product wear will occur - even in case diffuser elements are used.

What is usually taken through the filter is a flow of gas. The flow of gas is often atmospheric air, but in some cases it may be a kind of gas or a mixture of kinds of gases containing particles that are separated off the flow of gas in the filter.

Thus, a product may be concerned that is entrained in a flow of gas, which product is separated off in the filter, or particles may be concerned that are undesirable in a flow of gas and are hence separated off.

Thus, it may be the gas or gases in the flow of gas which constitute a final or partial product or it may be the product that is separated off.

It may thus also be purified air or purified gas from flue gas or the like it is desired to accomplish.

From EP 0 343 061 A is known a filter with a cylindrical inner portion within the filter housing, which cylindrical inner portion is arranged to encircle the filter elements at least across a part of the length of the filter elements. Further on the filter housing opposed to the area where the cylindrical inner part is arranged, a round-going inlet part is configured, which inlet part has a larger diameter than at least a portion of the filter housing that adjoins the inlet part.

From US 2004/055470 A1 is known a filter with a cylindrical inner portion within the filter housing, which cylindrical inner portion is arranged to encircle the filter elements at least across a part of the length of the filter elements.

In the following the term gas flow is used to designate the flow and the term gas is used in general.

The product most often being particulate, the product will, in the following, be referred to as particles; however, obviously, the term particles is to be construed in its widest sense.

The problem of having large amounts of particles in the gas is that the particles cause relatively much wear on eg the filter elements. This is typically solved by use of a pre-separator, eg in the shape of a cyclone.

A technique is known wherein gas and product are conveyed into the filter underneath the filter elements. Hereby the effect is accomplished that the major part of the product is separated off underneath the filter elements and drop down to the outlet of the filter. Thereby it is avoided that the particles that are contained in the gas flow are conveyed directly onto the filter elements.

However, this solution is associated with the drawback that a relatively large, upwardly oriented flow of gas passes between the filter elements which makes it difficult to clean the filter elements, the dust having to settle against the gas flow to leave the filter. In practice this means that a much larger filter than usual is to be applied to provide an upwardly oriented gas rate between the filter elements which is so low that the dust is able to drop against the gas flow.

### THE NOVEL TECHNIQUE

By the novel technique according to the invention it is accomplished that the ingoing gas flow is divided into an upwardly and a downwardly oriented gas flow which is not taken directly to the filter elements in the filter. The distribution of how much of the gas flow that is oriented upwards compared to the amount that is oriented downwards can be controlled by arrangement of a cylindrical inner portion in the shape of an inner wrap that extends in the longitudinal direction of the filter and is arranged in the area of a round-going inlet part.

This is achieved by that, the cylindrical inner part is arranged relative to the inlet part such that a passage is formed between the upper edge of the cylindrical inner part and the transition of the inlet part between the inlet part and the upper part of the filter housing, said passage having a larger cross-section or clearance than a passage formed between the lower part of the cylindrical inner part and the transition between the inlet part and a lower part of the filter housing, whereby the gas flow is divided into an upwardly oriented gas flow through the passage and a downwardly oriented gas flow through the passage controlled by arrangement of the cylindrical inner part.

According to an alternative embodiment, the cylindrical inner portion may be configured such that the lower part of the inner wrap extends further down into the filter housing than the expanse of the round-going inlet part, seen in the longitudinal direction of the filter housing.

The round-going inlet part of the filter housing is delimited in the longitudinal direction of the filter housing by transitions, the two transitions decreasing from a large diameter to the normal diameter of the filter housing in both the upwards and the downwards directions.

To provide the most even transition possible, the transitions may preferably be conical, but any suitable transition can be used.

The filter housing may have a larger diameter than the diameter of the inner wrap, the same diameter as the diameter of the inner wrap, or a smaller diameter than the diameter of the inner wrap. As opposed to this, the round-going inlet part will have a larger diameter than the inner wrap.

According to one embodiment the inner wrap may be suspended such that it is adjustable in height relative to the filter housing, whereby the gas slots that occur in the upwards direction and the downwards direction by virtue of the location of the upper and the lower edges, respectively, on the inner wrap relative to the transitions between the round-going inlet part and the normal diameter of the filter housing can be adjusted. Hereby modifications, if any, in amount and/or speed of the gas or air that passes through the filter can be adapted. A modification, if any, of composition and/or size of the particles that are to be filtered off the flow of gas can also be a parameter based on which an adjustment is conveniently made.

The ingoing gas flow being divided into an upwards and a downwards gas flow that is not taken directly to the filter elements in the filter by arrangement of a cylindrical inner part in the form of an inner wrap extending in the longitudinal direction of the filter and is arranged in the area of a round-going inlet part, however, the effect may occur that the gas flow will rotate at high speed as the gas flow will rotate "into itself' and hence provide a self-increasing effect to the rotation.

By a further embodiment in which the cylindrical inner part is provided with a kind of rotation brake or rotation breaker, improved distribution of the flow of air is accomplished in the upward and downward directions and that the rotation of the air or gas flow is reduced in the area around the filter inlet.

This is accomplished in that, between the filter housing and the cylindrical inner part, a partition body is provided in the shape of a rotation breaker that conveys at least a portion of the gas flow conveyed around the space formed between the inner side of the filter housing and the outer side of the cylindrical inner part, to the effect that the gas flow is deflected in an upwards and/or downwards direction by the rotation breaker. Therefore the gas flow is unable to rotate in the same horizontal plane.

Thus, the partition body serves as a rotation brake or rotation breaker, the partition body breaking the rotation of the gas flow to the effect that the gas flow does not continue to rotate around the inlet of the filter housing.

Without rotation breaker the gas flow will rotate in the inlet of the filter housing due to the gas entering through the inlet continuing its path along the inside of the filter housing in the space that is formed between the inner side of the filter housing and the outer side of the cylindrical inner part, and when the particle-containing gas flow comes around, it will be admixed with and accelerated upwards from the particle-containing flow of gas that enters by the inlet. The ensuing high rate of rotation will affect the filter elements to cause them to oscillate when the gas flow is, in a helical path, conveyed upwards across and/or down below the upper or lower edges of the inner cylindrical part. When the filter elements are caused to oscillate, they will strike against each other and are thus damaged.

The rotation breaker may be configured as a body that closes completely against the cylindrical inner part and against the inner side of the filter housing. This means that the particles that follow the inner side of the filter housing are conveyed in upwards and/or downwards directions past the partition body whereby the rotation is broken.

The rotation breaker may also be configured as a body that closes completely against the cylindrical inner part, while there is a small opening between the inner side of the filter housing and the rotation breaker. This means that the particles that follow the inner side of the filter housing get through and continue along. Hereby a dynamic separation process is generated where the particles follow a helical path around the filter and down towards the bottom of the filter.

The rotation breaker may be configured with a plane surface and may consist of one or more parts of plane surfaces.

The rotation breaker may also be configured with a curved surface or may consist of one or more portions of curved surfaces.

According to one embodiment the plane surface(s) may be formed from one or more sections of plates.

According to other embodiments the rotation breaker may be constituted by other spatial figures. The essential aspect of the rotation breaker or the rotation breakers is that it/they can be arranged at the inlet of the filter and are able to cut off entirely or partially the flow of gas to the effect that the rotation of the flow of gas is broken.

By providing the cylindrical inner portion with a number of essentially horizontally extending plates in connection with the rotation breaker, the amount of air is distributed more uniformly around the filter, the gas flow being pressed up and down, respectively, relative to the inlet area.

By configuring the essentially horizontally extending plates such that they are widest at the rotation breaker and subsequently decrease in width in pace with the distance to the rotation breaker being increased and seen against the flow direction, the effect is accomplished that the flow of gas is distributed more uniformly around the filter - upwards as well as downwards.

This means that the gap that is produced between the inner side of the filter housing and the essentially horizontally extending plates can be configured such that the distance between the gaps is changed more or less evenly or such that the change takes place in leaps.

The essentially horizontally extending plates may extend along the entire circumference of the cylindrical inner part without forming a gap between plate and the inner side of the filter housing. Instead the plate or the plates is/are configured with holes, which holes may be of different sizes. The holes may also be arranged in accordance with a specific pattern to obtain a particular distribution of gas flow and/or particles.

According to an alternative embodiment the rotation breaker may be mounted displaceably by ordinary displacement means to the effect that the rotation breaker, optionally along with the essentially horizontally extending plates, is displaced at least along a portion of the circumference of the cylindrical inner part.

According to yet an embodiment the essentially horizontally extending plates may be configured to support or be secured on the inner side of the filter housing and such that a gap is formed between the horizontally extending plate(s) and the cylindrical inner portion.

By breaking the rotation of the gas flow in this manner, improved distribution of the gas flow in the filter is accomplished.

This invention relates to a way in which even very large amounts of product can be handled in a filter without a pre-separator being mounted before the filter and without considerable wear to the filter elements.

It is the object of the present invention to provide a structure that solves this problem. It is accomplished by a cylindrical inner part being arranged in the filter housing and encircling the filter elements at least through a part of the length of the filter elements; and in that, on the filter housing opposed to the area where the cylindrical inner part is arranged, a round-going inlet part is configured, which inlet part has a larger diameter than at least a part of the filter housing that adjoins the inlet part.

In this way, the filter elements are protected against direct influence by the particles in the gas flow and hence against wear caused by such influence. By using a construction with a cylindrical inner part encircling the filter elements, a so-called inner wrap, gas with particles is conveyed into an integrated pre-separator chamber which is formed between inner wrap and a filter housing.

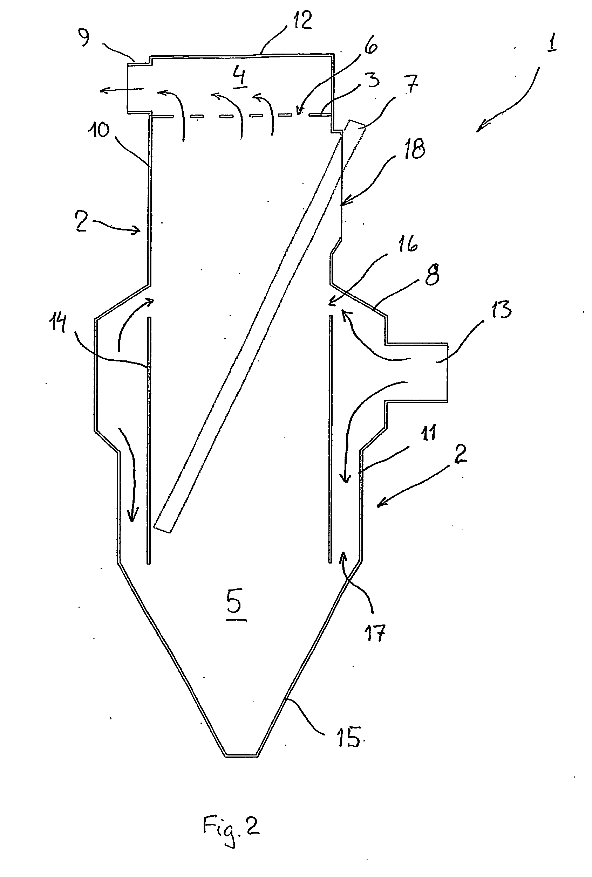

By a filter according to Figure 2 it is stated how the filter housing can be structured.

By claim 3 a convenient manner is provided in which to collect, at the bottom of the filter housing, the particles that leave the gas flow.

By claim 4 it is enabled that the collection of particles may take place directly into a silo intended therefore.

By claims 5, 6, and 7 it is accomplished that it is possible to arrange the cylindrical inner portion such that a convenient distribution of the gas flow results, both above the cylindrical inner portion (the inner wrap) and below the cylindrical inner portion.

By claim 8 it is accomplished that the cone at the bottom of the filter housing can also be used to adjust the passage of gas that occurs between the cylindrical inner part and the lower part of the filter housing to bring about a convenient distribution of the gas flow both above the cylindrical inner portion (the inner wrap) and below the cylindrical inner portion.

Claim 9 enables a way in which to exchange filter elements by use of an opening with a door or hatch in the upper part of the filter housing when, for various reasons, it is undesirable to exchange the filters through the top part.

Claims 10 and 11 describe convenient embodiments of accesses to the inlet part through which the gas flow is supplied.

Claim 12 enables a setting option for the cylindrical inner part for individual adaptation in accordance with various parameters, eg the gas flow for optimum distribution of the gas flow - both above the cylindrical inner part (the inner wrap) and below the cylindrical inner wrap.

By claim 13 it is accomplished that the gas flow is interrupted such that it is unable to rotate in essentially the same horizontal plane.

By a filter according to claim 14, an embodiment of the filter is provided that features a rotation breaker enabling particles to pass between rotation breaker and filter housing.

Claim 15 provides a further embodiment of the filter with the rotation breaker that allows particles to pass through one or more openings in the rotation breaker.

By claims 16 and 17, the described plate or edge enables that a larger part of the gas flow is pressed upwards from the inlet area, a larger counter-pressure being thus generated for the path of the gas underneath the cylindrical inner part and up between the filter elements.

By claims 18 to 23 it is accomplished that it is possible, in the filter, to adapt the rotation breaker by a number of plates that extend from the rotation breaker and around the gap between the inner side of the filter housing and the outer side of the cylindrical inner part to obtain convenient flow through the filter.

When a certain amount of particles have deposited on the filter elements and it is desired to release them from the filter elements, such release of the particles can be accomplished in a usual manner by means of a cleaning pulse or by turning the gas flow.

Thereby the particles are released and they drop to the bottom of the filter housing.

The invention will now be explained in further detail with reference to the drawing, wherein:
Figure 1 schematically shows a cut-through filter with a radially arranged access to the filter inlet;
Figure 1A shows the filter of Figure 1, seen from above;
Figure 2 schematically shows a cut-through filter with a radially arranged access to the filter inlet, wherein it is indicated that a filter element can be exchanged through a door intended therefor;
Figure 3 schematically shows a cut-through filter with a tangentially arranged access to the filter inlet;
Figure 3A shows the filter of Figure 3, seen from above; and
Figure 4 schematically shows a through-cut filter with a tangentially arranged access to the filter inlet, wherein it is indicated that a filter can be exchanged through a door intended therefor;
Figure 5 shows a filter, seen from above, with cylindrical inner part and with partition body;
Figure 6 shows the filter of Figure 5, seen along partial section A-A;
Figure 7 shows a filter with indication of the location of section B-B;
Figure 8 shows the filter of Figure 7, seen along section B-B;
Figure 9 shows a filter with indication of the location of section C-C; and
Figure 10 shows the filter of Figure 9, seen along section C-C.

Now, convenient embodiments of the invention will be described with reference to the drawing.

According to a first embodiment the invention comprises a filter 1 comprising a filter housing 2 with a substantially horizontal partition wall 3 that divides the filter housing 2 into a clean-gas chamber 4 and a dust chamber 5, said partition wall 3 being provided with a number of openings 6 in which a plurality of filter elements 7 are arranged that are secured to the partition wall 3 and extend down into the dust chamber 5; which filter 1 is provided with an inlet 13 which is, via an inlet part 8, in open communication with the dust chamber 5, said inlet part 8 being configured for introduction of a dust-containing gas flow to the dust chamber 5 from where it is possible to suck through the filter elements 7 and into the clean-gas chamber 4 from where the filtered gas is discharged through a pure-gas outlet 9. The gas flow to the dust chamber 5 can also be conveyed through the filter elements by superatmospheric pressure, by natural convection or the like.

The filter housing 2 comprises a round-going filter inlet part 8 that divides the filter housing 2 into an upper part 10 and a lower part 11. The upper part 10 of the filter housing 2 is preferably finished by a top part 12 to which a discharge pipe or the like can be coupled for a discharge gas that leaves the filter through the clean-gas outlet 9 of the top part 12.

Gas containing particles are fed through an access or inlet 13 and into a pre-chamber in the form of the round-going inlet part 8. From the inlet part 8 the gas and the product is advanced into the filter 1. The gas with particles are conveyed partially across a cylindrical inner part, also designated an inner wrap 14, and around filter elements 7 and partially underneath the inner wrap 14 and up between the filter elements 7.

The filter elements 7 are arranged eg i holes 6 in the substantially horizontal partition wall 3 to the effect that they are suspended from the horizontal partition wall 3 and down into the dust chamber 5 to which the dust-containing gas or air is supplied and sucked above the partition wall 3 through the filter elements 7. The dust particles are hereby deposited on the filter elements 7 and drop to the bottom 15 of the filter 1, from where they can be removed.

When a certain amount of particles have settled on the filter elements 7 and it is desired to release them from the filter elements 7, it is possible, in a usual manner, to release the particles by means of a cleaning pulse or by reversing the gas flow.

Thereby the particles are released and they drop to the bottom 15 of the filter housing 2.

The bottom 15 may be configured as a cone or conical part that tapers downwardly, but the bottom 15 may also be curved or plane.

According to a particular embodiment the bottom is optional, the filter 1 being arranged directly on top of a silo (not shown).

By configuring the inlet part 8 such that a larger counter-pressure is formed for the gas' path down below the inner wrap 14 and up between the filter elements 7 compared to the counter pressure for gas' path up above the inner wrap 14 and in between the filter elements 7, the effect is accomplished that a larger amount of gas is conveyed above the inner wrap 14 than is conveyed below the inner wrap 14. By arranging the inner wrap 14 relative to the inlet part 8 such that a passage 16 is formed between the upper edge of the inner wrap 14 and the transition of the inlet part 8 between inlet part 8 and the upper part 10 of the filter housing 2, said passage 16 having a larger cross-section or clearance than a passage 17 formed between the lower part of the inner wrap 14 and the transition between inlet part 8 and the lower part 11 of the filter housing 2.

Here, the inner wrap 14 may have the same diameter as at least one of the upper 10 and the lower 11 parts of the filter housing, and in a particular embodiment both the inner wrap 14 and the upper 10 and lower 11 part of the filter housing 2 may have the same diameter.

According to yet an embodiment the inner wrap 14 is positioned such relative to the inlet part 8 that a passage 16 is formed between the upper edge of the inner wrap 14 and the transition of the inlet part 8 between inlet part 8 and the upper part 10 of the filter housing 2, said passage 16 having a larger cross section or clearance than a passage 17 formed between the lower part of the inner wrap 14 and the lower part 11 of the filter housing 2.

According to a further embodiment the passage 17 may be configured between the lower part of the inner wrap 14 and the cone 15 of the filter 1.

According to a particular embodiment, the upper part 10 of the filter housing 2 may have the same diameter, but different diameters for upper 10 and lower 11 part of the filter housing are also applicable.

By suspending the inner wrap 14 to be adjustable in height in the filter 1 by means of ordinary means for performing height adjustment in such a manner that the location of the inner wrap 14 can be set in height relative to the filter housing 2, the distribution of the gas flow in the filter housing 2 can be adjusted. These common means can be in the shape of longitudinally extending slots in which a bolt may travel and be secured. It may be chains that are secured to the partition wall 3 of the filter, which chains can be fixed with a given length to the inner wrap, or it may be stays in the form of threaded spindles that set the location of the inner wrap 14. However, it is of no particular consequence which means are used to perform such height adjustment, the essential aspect being that such adjustment of the location of the inner wrap 14 relative to the filter housing 2 is indeed performed, whereby the two passages 16, 17 can be adjusted relative to each other and hence be adapted to the rate of the gas flow, its density, particle size and like parameters.

Hereby it is possible to convey the major part of the bulk of gas above the inner wrap 14 and in between the filter elements 7, while simultaneously a relatively small, upwards gas flow results between the filter elements 7. Since the major part of the bulk of gas is conveyed above the inner wrap 14, it will bring about the effect that, in the upper part of the filter 1, and relatively far towards the bottom of the filter elements, a downwards gas flow results between the filter elements 7.

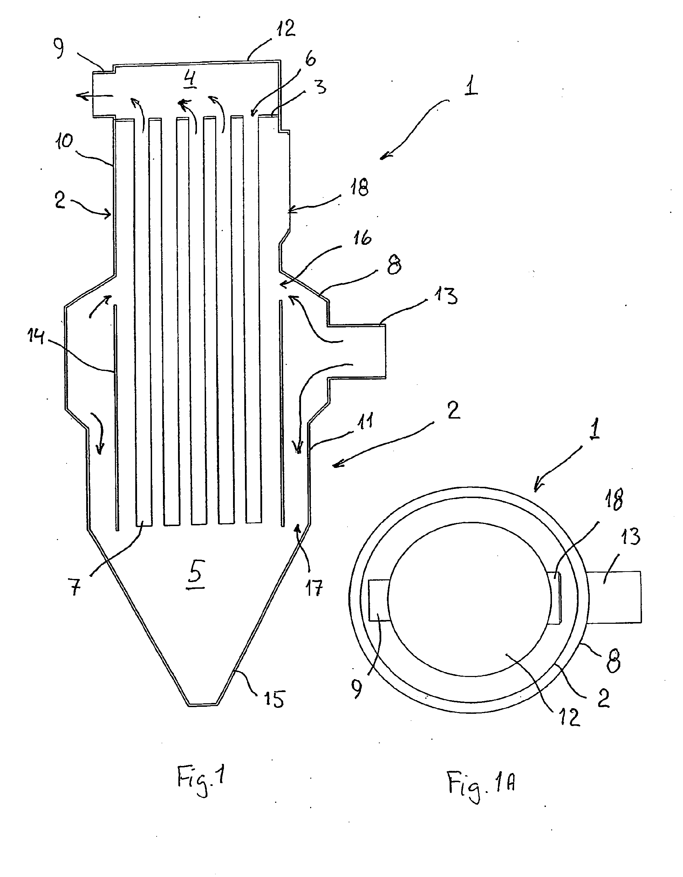

As shown in figures 1, 1A and 2, the gas can be conveyed into the round-going inlet part 8 by means of a tangentially arranged access 13.

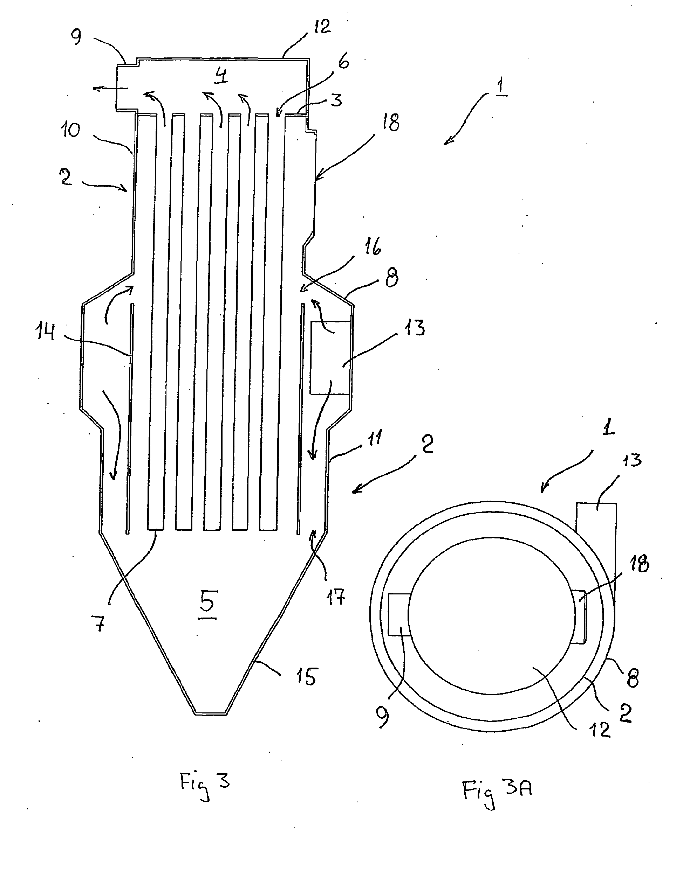

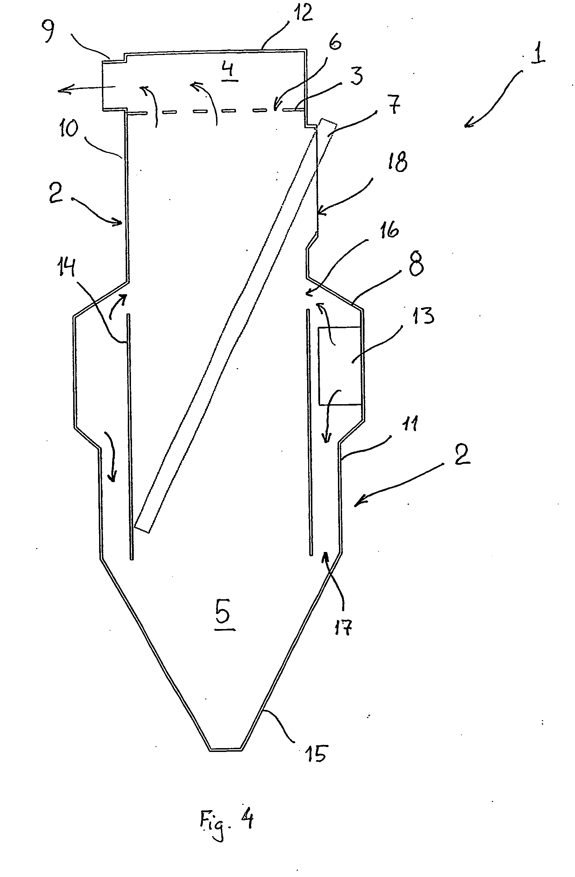

As shown in figures 3, 3A and 4, the gas may also be conveyed into the round-going inlet part 8 by means of a tangentially arranged access 13. When the gas flow is conveyed into the inlet part 8 through a tangentially arranged access 13, a certain cyclone effect results, the particles being caused to enter a path around the inner wrap 14 and slowly dropping in a helical path towards the opening between inner wrap 14 and filter housing 2 and/or cone 15. The gas flow will, in this context, too, be distributed above the inner wrap 14 through the passage 16 and below the inner wrap through the passage 17.

According to yet an embodiment, it is an option, to further ensure that the flow of air is distributed in upwards and downwards directions, to provide the cylindrical inner part with some kind of rotation brake or rotation breaker. Hereby improved distribution of the flow of air in upwards and downwards directions will result. Moreover, it is accomplished that the rotation of the gas flow in the area around the filter inlet is not caused to rotate "into itself" and thereby a self-increasing rotation of the flow of air or gas into the inlet part 8 is obviated.

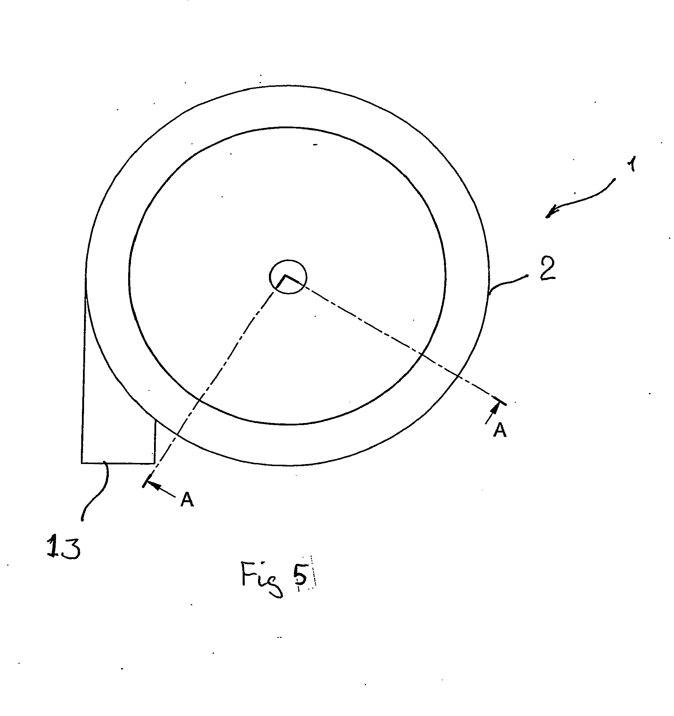

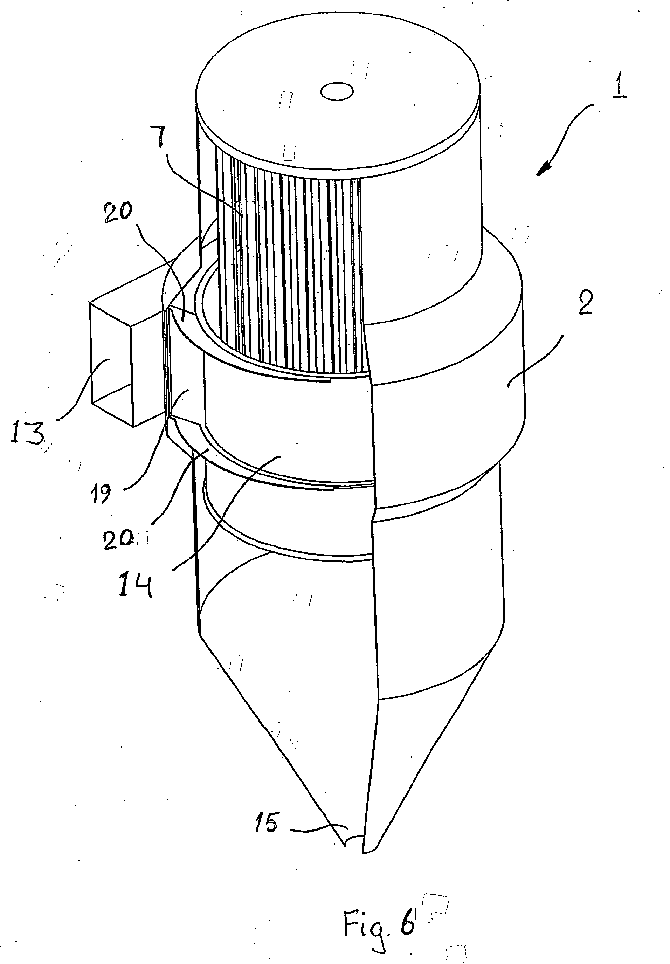

This is accomplished in that, as shown in figures 5 and 6, between the filter housing 2 and the cylindrical inner part 14, a partition body 19 is arranged that prevents the gas flow from rotating in the same horizontal plane.

Thus, the partition body 19 functions as a rotation brake or rotation breaker, the partition body 19 breaking the rotation of the gas flow to the effect that at least a portion of the gas flow that is conveyed around the gap formed between the inner side of the filter housing 2 and the outer side of the cylindrical inner portion 14, is thus deflected in an upwardly oriented and/or downwardly oriented direction by the rotation breaker 19. Therefore the gas flow is unable to rotate in the same horizontal plane.

Without rotation breaker 19 the gas flow will rotate within the filter housing 2 due to the air or gas entering through the inlet 13 continuing to move along the inner side of the filter housing 2 in the gap that is formed between the inner side of the filter housing 2 and the outer side of the cylindrical inner part 14, and when the particle-containing gas flow comes around, it will be admixed with and accelerated by the particle-containing gas flow that enters through the inlet 13. The high speed of rotation that occurs as a result of this will influence the filter elements 7 to the effect that they are caused to oscillate. When the filter elements 7 are caused to oscillate, they will strike against each other and hence be damaged.

The rotation breaker 19 may be configured as a body 19 that adjoins snugly against the cylindrical inner part 14 and against the inner side of the filter housing 2. This causes the particles that follow the inside of the filter housing 2 to be conveyed in the upwards direction or downwards direction past the rotation breaker 19, whereby the rotation is broken.

The rotation breaker 19 can also be configured as a body 19 that adjoins snugly against the cylindrical inner part 14 while there is a narrow opening between the inner side of the filter housing 2 and the rotation breaker. This means that the particles that follow the inner side of the filter housing 2 are allowed through and continue along. Hereby a dynamic separation process is generated where the particles follow a helical path around the filter 1 and down towards the bottom 15 of the filter 1.

The rotation breaker 19 can also be configured with a plane surface and may consist of one or more sections of plane surfaces.

The rotation breaker 19 can also be configured with a curved surface or may consist of one or more sections of curved surfaces.

According to one embodiment the plane surface(s) may be formed from one or more pieces of plate.

According to other embodiments the rotation breaker 19 may be constituted of other spatial figures. The essential aspect of the rotation breaker 19 or partition body is that it can be arranged at the inlet 13 of the filter 1 and that it is able to block off the flow of gas to the effect that the rotation of the gas flow is broken.

In order to obtain a more convenient distribution of the flow of gas along the inner side of the filter housing 2 and above and below, respectively, the edges of the cylindrical inner portion 14, a number of plates can be arranged that are secured along the inside of the filter housing 2 or the inlet 13, said plates preferably extending along the entire circumference. The plates may be essentially horizontal or may have an inclination that points inwards/downwards relative to a vertical axis that extends through the centre of the filter 1.

By arranging these plates in connection with the cylindrical inner part 14, it is accomplished that a larger part of the gas flow is pressed upwards from the inlet area, a larger counter-pressure being formed for the gas' path down below the cylindrical inner portion 14 and up between the filter elements 7. Hereby the effect is accomplished that a larger amount of gas is conveyed above the cylindrical inner portion 14 which contributes to ensuring a relatively slow upwards gas flow between the filter elements.

According to one embodiment the plates that are arranged in/secured to the filter housing 2 can be supplemented with a number of plates that are secured to the rotation breaker 19.

By providing the rotation breaker 19 with a number of plates 20 that extend at least along a portion of the circumference of the cylindrical inner part 14, an even more convenient and uniform distribution of the amount of air circulating the filter 1 is accomplished, the gas flow being pressed upwards and downwards, respectively, from the inlet area.

The plates 20 that are arranged in immediate communication with the rotation breaker 19 are preferably secured to the rotation breaker 19 on its upper or lower edge.

The vertical expanse of the rotation breaker 19 corresponds essentially to the vertical expanse of the inlet 13.

By configuring the plates 20 such that they have the largest width at the rotation breaker 19 and then decrease in pace with the distance to the rotation breaker 19 being increased and seen against the flow direction, the effect is accomplished that the flow of gas is distributed more uniformly around the filter 1, in upwards as well as downwards directions.

That means that the gap produced between the inner side of the filter housing 2 and the plates 20 can be configured such that the distance between the gap is changed more or less evenly or such that the change takes place in leaps.

The plates 20 may extend along the entire circumference of the cylindrical inner part 14 without a gap being formed between the plate 20 and the inner side of the filter housing 2. Instead the plate 20 or the plates is (are) provided with holes, which holes may have different sizes. The holes may also be positioned in accordance with a specific pattern to achieve a particular distribution of gas flow and/or particles.

According to a further embodiment the rotation breaker 19 may be mounted displaceably by ordinary displacement means to the effect that the rotation breaker 19, optionally with plates 20, can be shifted at least along a part of the circumference of the cylindrical inner part 14.

According to yet an embodiment the plates 20 can be configured such that they support on or are secured to the inner side of the filter housing 2 and such that a gap is formed between the plates 20 and the cylindrical inner part 14.

The rotation breaker 19 in the filter 1 may be configured such that at least one of the plates 20 extend(s) along the circumference of the cylindrical inner part 4.

According to other embodiments 1 of the filter, the rotation breaker may be configured such that at least one of the plates 20 extend(s) within an interval of between 0-325°, 15-120° or 80-100°, respectively, along the circumference of the cylindrical inner part 4, depending on the dimensions of the filter housing and on the flow rate in the filter and in the filter outlet.

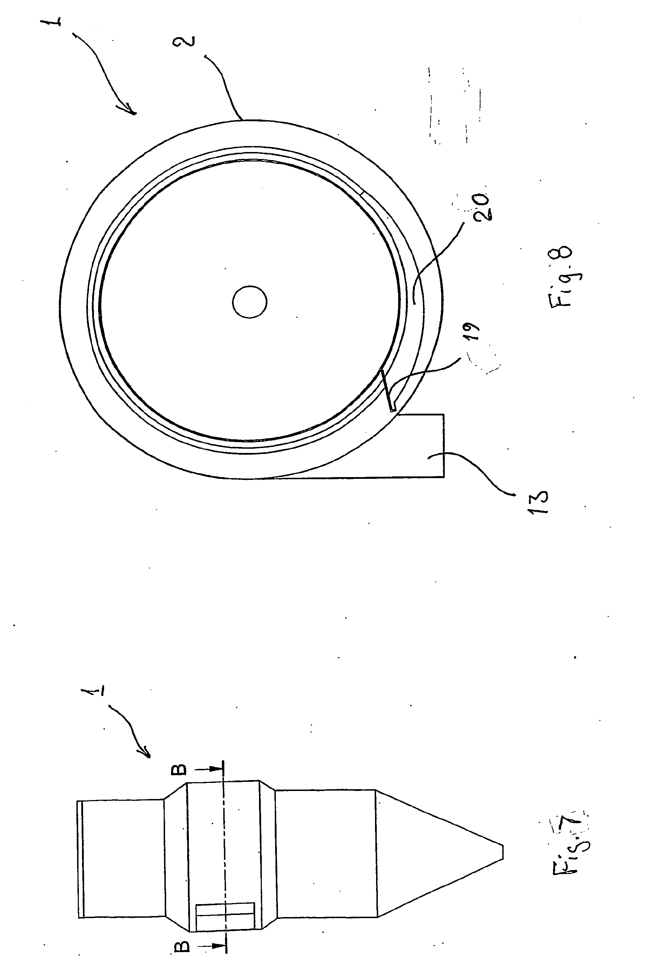

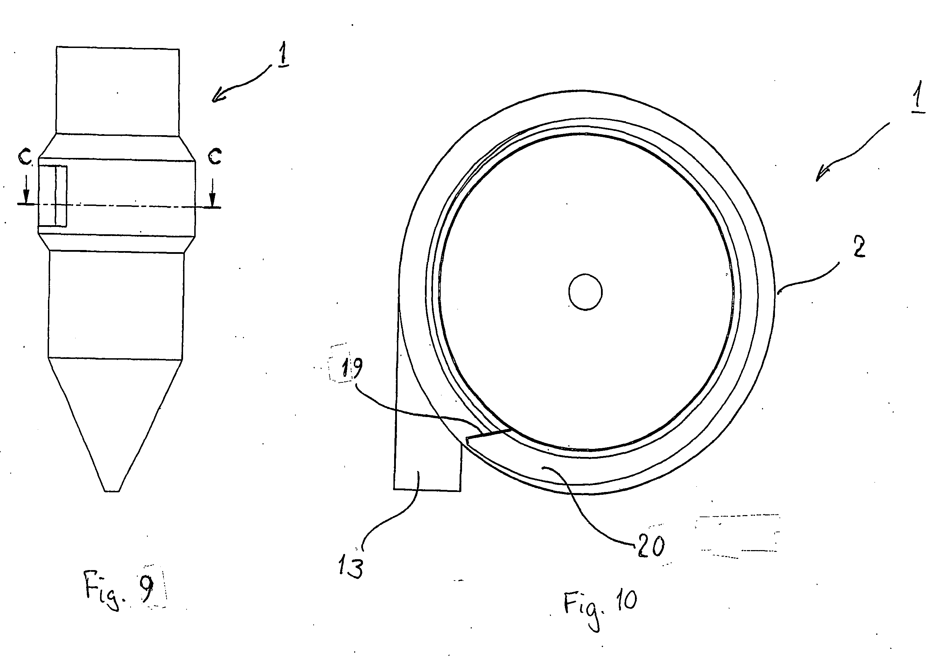

Various configurations of the plates 20 will appear from figures 7 through 10.

The plates may be arranged substantially horizontally or may have a clear inclination. What matters is that it is avoided that particles accumulate on a plate with an backwards inclination; that is a plate where the free edge is higher in level than the edge secured to the filter housing 2 or eg to the cylindrical inner part 14. Therefore the plates are preferably, in connection with the invention, arranged substantially horizontally or have such inclination that the edge which is free at any time is located at a lower level than an edge, if any, that adjoins or is secured to a substantially vertical face.

From figures 2 and 4 it will appear that the upper part 10 of the filter housing 2 is configured with an opening 18 that can be closed tightly with a door or hatch (not shown).

Thereby it is possible to access the filter elements with a view to exchange or inspection. Precisely that option is of major significance in plants where there is no space for top removal of filter elements, which usually takes place by the top part of the filter being dismounted and the filter elements being removed from the top of the filter.

In that the inner wrap does not extend so far up and around the filter elements, a larger accessible area between the upper parts of the filter elements for distributing the amount of gas conveyed across the upper part of the inner wrap results, which yields lower gas rates and less or no wear on the filter elements.

It is important in the context of alternative solutions that the volume of the dust chamber does not become excessive. If, to facilitate exchange of the filter elements, it is attempted to increase the height of the filter housing compared to the inner wrap, an inconveniently large and superfluous volume between the filter elements will occur in the filter with and ensuing increased occurrence of dust particles. Precisely that scenario is undesirable since a dust explosion, if any, will be more difficult to manage and/or limit.

## Claims

1. A filter (1) comprising a filter housing (2) with an essentially horizontal partition wall (3) dividing the filter housing (2) into a clean-gas chamber (4) and a dust chamber (5), said partition wall (3) being provided with a number of openings (6) wherein a plurality of filter elements (7) are arranged that are secured to the partition wall (3) and extend downwards into the dust chamber (5), which filter (1) is provided with an inlet part (8) in open communication with the dust chamber (5), said inlet part (8) being configured for supplying a dust-containing flow of gas to the dust chamber (5), said gas flow being conveyed through the filter elements (7) and upwards into the clean-gas chamber (4), from where the filtered gas is discharged through a clean-gas outlet (9), and in the filter housing (2), a cylindrical inner portion (14) is arranged that encircles the filter elements (7) at least across a part of the length of the filter elements (7); and in that, on the filter housing (2) opposed to the area where the cylindrical inner part (14) is arranged, a round-going inlet part (8) is configured, which inlet part (8) has a larger diameter than at least a portion of the filter housing (2) that adjoins the inlet part (8), **characterised in that**, the cylindrical inner part (14) is arranged relative to the inlet part (8) such that a passage (16) is formed between the upper edge of the cylindrical inner part (14) and the transition of the inlet part (8) between the inlet part (8) and the upper part (10) of the filter housing (2), said passage (16) having a larger cross-section or clearance than a passage (17) formed between the lower part of the cylindrical inner part (14) and the transition between the inlet part (8) and a lower part (11) of the filter housing (2), whereby the gas flow is divided into an upwardly oriented gas flow through the passage (16) and a downwardly oriented gas flow through the passage (17) controlled by arrangement of the cylindrical inner part (14).

2. A filter according to claim 1, **characterised in that** the filter housing (2) comprises an upper, cylindrical part (10) and a lower cylindrical part (11), which cylindrical parts (10, 11) are connected by the round-going inlet part (8).

3. A filter according to claim 1 or 2, **characterised in that** the lower, cylindrical (11) part of the filter housing (2) is connected downwardly to a conical part (15) for collecting falling particles in the filter housing (2).

4. A filter according to claim 1 or 2, **characterised in that** the lower cylindrical part (11) of the filter housing (2) is directly connected downwardly to the top of a silo.

5. A filter according to any one of claims 1-4, **characterised in that** the cylindrical inner part (14) extends in an area concentrically with the lower cylindrical part (11) of the filter housing (2).

6. A filter according to claim 3, **characterised in that** the cylindrical inner part (14) extends in an area concentrically to the lower cylindrical part (11) of the filter housing (2) and down into a conical part (15).

7. A filter according to any one of the preceding claims, **characterised in that** an opening (18) is provided having a door or hatch in the upper part of the filter housing (2) for exchange of filter elements (7).

8. A filter according to any one of the preceding claims, **characterised in that** an access (13) to the inlet part 8) is arranged radially on the inlet part (8).

9. A filter according to any one of the preceding claims 1-7, **characterised in that** the access (13) to the inlet part (8) is arranged tangentially to the inlet part (8).

10. A filter according to any one of the preceding claims, **characterised in that** the cylindrical inner part (14) is arranged to be adjustable in height relative to the filter housing (2):

11. A filter according to claim 1, **characterised in that**, between the filter housing (2) and the cylindrical inner part (4), at least one rotation breaker (19) is arranged that conveys at least a part of the gas flow circulating in the gap formed between the inner side of the filter housing (2) and the outer side of the cylindrical inner part (4) to the effect that the flow of gas is deflected in an upwards and/or downwards direction.

12. A filter according to claim 11, **characterised in that** the rotation breaker (19) forms an open gap towards the filter housing (2), whereby particles that follow the filter housing (2) are allowed to pass through and continue along, preferably in a downwards helical path.

13. A filter according to claim 11, **characterised in that** the rotation breaker (19) is provided with one or more holes.

14. A filter according to claim 11, 12 or 13, **characterised in that**, along the inner side of the filter housing (2), a plate or edge (20) is arranged that extends inwards/downwards relative to a vertical axis through the centre of the filter (1).

15. A filter according to claim 14, **characterised in that** the plate or the edge (20) extends along at least a portion of the inner side of the filter housing (2).

16. A filter according to claim 11, 12, 13, 14, or 15, **characterised in that**, from the rotation breaker (19), a number of plates (20) extend that extend around the gap between the inner side of the filter housing (2) and the outer side of the cylindrical inner portion (4), which plates (20) decrease in width in pace with the distance to the rotation breaker (19) increasing.

17. A filter according to claim 16, **characterised in that** a plate (20) is arranged at the upper edge of the rotation breaker (19) and at the lower edge of the rotation breaker (19).

18. A filter according to claim 16 or 17, **characterised in that** at least one of the plates (20) extends along the circumference of the cylindrical inner portion (4).

19. A filter according to claim 16 or 17, **characterised in that** at least one of the plates (20) extends within an interval of between 0-325° along the circumference of the cylindrical inner part (4).

20. A filter according to claim 16 or 17, **characterised in that** at least one of the plates (20) extends within an interval of between 15-120° along the circumference of the cylindrical inner part (4).

21. A filter according to claim 16 or 17, **characterised in that** at least one of the plates (20) extends within an interval of between 80-100° along the circumference of the cylindrical inner part (4).

## Patentansprüche

1. Filter (1) umfassend ein Filtergehäuse (2) mit einer im Wesentlichen horizontalen Trennwand (3), welche das Filtergehäuse (2) in eine Reingaskammer (4) und eine Staubkammer (5) einteilt, welche Trennwand (3) mit einer Anzahl von Öffnungen (6) versehen ist, wobei eine Mehrzahl von Filterelementen (7) vorgesehen sind, welche an der Trennwand (3) befestigt sind und sich in die Staubkammer (5) nach unten erstrecken, welcher Filter (1) mit einem mit der Staubkammer (5) in offener Kommunikation stehenden Einlassteil (8) versehen ist, welcher Einlassteil (8) dazu ausgebildet ist, eine Staub enthaltende Gasströmung zur Staubkammer (5) zuzuführen, welche Gasströmung durch die Filterelemente (7) hindurch und in die Reingaskammer (4) nach oben gefördert wird, ausgehend von welcher das gefilterte Gas durch einen Reingasauslass (9) hindurch ausgetragen wird, und im Filtergehäuse (2) ein zylindrisches inneres Teil (14) vorgesehen ist, welches die Filterelemente (7) zumindest über einen Teil der Länge der Filterelemente (7) umgibt; und dass an dem Filtergehäuse (2), welches dem Bereich, in dem das zylindrische innere Teil (14) angeordnet ist, entgegengesetzt ist, ein umlaufendes Einlassteil (8) ausgebildet ist, welches Einlassteil (8) einen größeren Durchmesser aufweist als zumindest ein Abschnitt des an das Einlassteil (8) angrenzenden Filtergehaüses (2), **dadurch gekennzeichnet, dass** das zylindrische innere Teil (14) relativ zum Einlassteil (8) derart angeordnet ist, dass ein Durchgang (16) zwischen dem oberen Rand des zylindrischen inneren Teils (14) und dem Übergang des Einlassteils (8) zwischen dem Einlassteil (8) und dem oberen Teil (10) des Filtergehäuses (2) gebildet ist, welcher Durchgang (16) einen größeren Querschnitt oder Zwischenraum aufweist als ein zwischen dem unteren Teil des zylindrischen inneren Teils (14) und dem Übergang zwischen dem Einlassteil (8) und einem unteren Teil (11) des Filtergehäuses (2) gebildeter Durchgang (17), wobei die Gasströmung in eine durch den Durchgang (16) hindurch nach oben gerichtete Gasströmung und eine durch den Durchgang (17) hindurch nach unten gerichtete Gasströmung eingeteilt wird, welche durch Anordnung des zylindrischen inneren Teils (14) gesteuert werden.

2. Filter nach Anspruch 1, **dadurch gekennzeichnet, dass** das Filtergehäuse (2) ein oberes zylindrisches Teil (10) und ein unteres zylindrisches Teil (11) aufweist, welche zylindrische Teile (10, 11) durch den umlaufenden Einlassteil (8) miteinander verbunden sind.

3. Filter nach Anspruch 1 oder 2, **dadurch gekennzeichnet, dass** das untere zylindrische (11) Teil des Filtergehäuses (2) nach unten mit einem konischen Teil (15) zum Auffangen von in das Filtergehäuse (2) fallenden Partikeln verbunden ist.

4. Filter nach Anspruch 1 oder 2, **dadurch gekennzeichnet, dass** das untere zylindrische Teil (11) des Filtergehäuses (2) nach unten mit dem oberen Teil eines Speichers unmittelbar verbunden ist.

5. Filter nach einem der Ansprüche 1 bis 4, **dadurch gekennzeichnet, dass** sich das zylindrische innere Teil (14) in einen zum unteren zylindrischen Teil (11) des Filtergehäuses (2) konzentrischen Bereich erstreckt.

6. Filter nach Anspruch 3, **dadurch gekennzeichnet, dass** sich das zylindrische innere Teil (14) in einen zum unteren zylindrischen Teil (11) des Filtergehäuses (2) konzentrischen Bereich und nach unten in ein konisches Teil (15) erstreckt.

7. Filter nach einem der vorgehenden Ansprüche, **dadurch gekennzeichnet, dass** eine Öffnung (18) vorgesehen ist, welche eine Tür oder eine Luke in dem oberen Teil des Filtergehäuses (2) zum Austausch von Filterelementen (7) aufweist.

8. Filter nach einem der vorgehenden Ansprüche, **dadurch gekennzeichnet, dass** radial am Einlassteil (8) ein Eintritt (13) zum Einlassteil (8) vorgesehen ist.

9. Filter nach einem der vorgehenden Ansprüche 1 bis 7, **dadurch gekennzeichnet, dass** der Eintritt (13) zum Einlassteil (8) tangential zum Einlassteil (8) angeordnet ist.

10. Filter nach einem der vorgehenden Ansprüche, **dadurch gekennzeichnet, dass** das zylindrische innere Teil (14) relativ zum Filtergehäuse (2) höhenjustierbar ausgebildet ist.

11. Filter nach Anspruch 1, **dadurch gekennzeichnet, dass** zwischen dem Filtergehäuse (2) und dem zylindrischen inneren Teil (4) mindestens ein Rotationsschalter (19) angeordnet ist, welcher zumindest einen Teil der Gasströmung fördert, welche in dem zwischen der Innenseite des Filtergehäuses (2) und der Außenseite des zylindrischen inneren Teils (4) gebildeten Spalt zirkuliert, damit die Gasströmung in eine Richtung nach oben und/oder in eine Richtung nach unten umgeleitet wird.

12. Filter nach Anspruch 11, **dadurch gekennzeichnet, dass** der Rotationsschalter (19) zum Filtergehäuse (2) hin einen offenen Spalt bildet, wodurch es Partikeln, die dem Filtergehäuse (2) folgen, ermöglicht wird, durchzuströmen und entlang, vorzugsweise in einer nach unten spiralförmigen Bahn, fortzusetzen.

13. Filter nach Anspruch 11, **dadurch gekennzeichnet, dass** der Rotationsschalter (19) mit einem oder mehreren Löchern versehen ist.

14. Filter nach Anspruch 11, 12 oder 13, **dadurch gekennzeichnet dass** entlang der Innenseite des Filtergehäuses (2) eine Platte oder Kante (20) vorgesehen ist, welche sich relativ zu einer vertikalen Achse durch das Zentrum des Filters (1) hindurch erstreckt.

15. Filter nach Anspruch 14, **dadurch gekennzeichnet, dass** sich die Platte oder die Kante (20) entlang zumindest einem Teil der Innenseite des Filtergehäuses (2) erstreckt.

16. Filter nach Anspruch 11, 12, 13, 14 oder 15, **dadurch gekennzeichnet, dass** ausgehend vom Rotationsschalter (19) sich eine Anzahl von Platten (20) erstrecken, welche um den Spalt zwischen der Innenseite des Filtergehäuses (2) und der Außenseite des zylindrischen inneren Teils (4) herum erstrecken, wobei die Breite der Platten (20) sich mit dem zunehmenden Abstand zum Rotationsschalter (19) reduziert.

17. Filter nach Anspruch 16, **dadurch gekennzeichnet, dass** eine Platte (20) an dem oberen Rand des Rotationsschalters (19) und an dem unteren Rand des Rotationsschalters (19) angeordnet ist.

18. Filter nach Anspruch 16 oder 17, **dadurch gekennzeichnet, dass** sich mindestens eine der Platten (20) entlang des Umfangs des zylindrischen inneren Teils (4) erstreckt.

19. Filter nach Anspruch 16 oder 17, **dadurch gekennzeichnet, dass** sich mindestens eine der Platten (20) innerhalb von einem Bereich von 0-325° entlang des Umfangs des zylindrischen inneren Teils (4) erstreckt.

20. Filter nach Anspruch 16 oder 17, **dadurch gekennzeichnet, dass** sich mindestens eine der Platten (20) innerhalb von einem Bereich von 15-120° entlang des Umfangs des zylindrischen inneren Teils (4) erstreckt.

21. Filter nach Anspruch 16 oder 17, **dadurch gekennzeichnet, dass** sich mindestens eine der Platten (20) innerhalb von einem Bereich von 80-100° entlang des Umfangs des zylindrischen inneren Teils (4) erstreckt.

## Revendications

1. Filtre (1) comprenant un boîtier de filtre (2) avec une paroi de séparation (3) essentiellement horizontale et divisant le boîtier de filtre (2) dans une champre de gaz propre (4) et une chambre à poussière (5), ladite paroi de séparation (3) étant pourvue d'un certain nombre d'ouvertures (6) où une pluralité d'éléments filtrants (7) sont agencés et fixés à la paroi de séparation (3) et s'étendent vers le bas dans la chambre à poussière (5), ledit filtre (1) étant prévu avec une partie d'entrée (8) en communication ouverte avec la chambre à poussière (5), ladite partie d'entrée (8) étant configurée pour fournir un écoulement de gaz contenant de poussière à la chambre à poussière (5), ledit écoulement de gaz étant transporté à travers les éléments filtrants (7) et vers le haut dans la chambre de gaz propre (4), d'où le gaz filtré est évacué par un orifice de sortie de gaz propre (9), et dans le boîtier de filtre (2), une partie cylindrique intérieure (14) étant agencée pour entourer les éléments filtrants (7) à travers au moins une partie de la longueur des éléments filtrants (7); et en ce que, sur le boîtier de filtre (2) face à la zone où la partie cylindrique intérieure (14) est agencé, une partie d'entrée ronde continue (8) est configurée, ladite partie d'entrée (8) présentant un diamètre supérieur à celui d'au moins une portion du boîtier de filtre (2) qui se raccorde à la partie d'entrée (8), **caractérisé en ce que** la partie cylindrique intérieure (14) est agencée par rapport à la partie d'entrée (8) si bien qu'un passage (16) est formé entre le bord supérieur de la partie cylindrique intérieure (14) et la transition de la partie d'entrée (8) entre la partie d'entrée (8) et la partie supérieure (10) du boîtier de filtre (2), ledit passage (16) présentant une section transversale ou un espace libre supérieur à un passage (17) formé entre la partie inférieure de la partie cylindrique intérieure (14) et la transition entre la partie d'entrée (8) et une partie inférieure (11) du boîtier de filtre (2), l'écoulement de gaz étant divisé en un écoulement de gaz orienté vers le haut à travers le passage (16) et un écoulement de gaz orienté vers le bas à travers le passage (17) commandé par l'arrangement de la partie cylindrique intérieure (14).

2. Filtre selon la revendication 1, **caractérisé en ce que** le boîtier de filtre (2) comprend une partie supérieure cylindrique (10) et une partie inférieure cylindrique (11), les parties cylindriques (10, 11) étant reliées par la partie d'entrée ronde continue (8).

3. Filtre selon la revendication 1 ou 2, **caractérisé en ce que** la partie cylindrique inférieure (11) du boîtier de filtre (2) est reliée vers le bas à une partie conique (15) pour collecter les particules tombantes dans le boîtier de filtre (2).

4. Filtre selon la revendication 1 ou 2, **caractérisé en ce que** la partie cylindrique inférieure (11) du boîtier de filtre (2) est directement reliée vers le bas à la partie supérieure d'un silo.

5. Filtre selon l'une quelconque des revendications 1 à 4, **caractérisé en ce que** la partie intérieure cylindrique (14) s'étend dans une zone concentrique à la partie cylindrique inférieure (11) du boîtier de filtre (2).

6. Filtre selon la revendication 3, **caractérisé en ce que** la partie intérieure cylindrique (14) s'étend dans une zone concentrique à la partie cylindrique inférieure (11) du boîtier de filtre (2) et vers le bas dans une partie conique (15).

7. Filtre selon l'une quelconque des revendications précédentes, **caractérisé en ce qu'**une ouverture (18) est prévue avec une porte ou une trappe dans la partie supérieure du boîtier de filtre (2) pour l'échange d'éléments filtrants (7).

8. Filtre selon l'une quelconque des revendications précédentes, **caractérisé en ce qu'**un accès (13) à la partie d'entrée (8) est disposé radialement sur la partie d'entrée (8).

9. Filtre selon l'une quelconque des revendications précédentes 1 à 7, **caractérisé en ce que** l'accès (13) à la partie d'entrée (8) est disposé tangentiellement à la partie d'entrée (8).

10. Filtre selon l'une quelconque des revendications précédentes, **caractérisé en ce que** la partie intérieure cylindrique (14) est agencé pour être réglable en hauteur par rapport au boîtier de filtre (2).

11. Filtre selon la revendication 1, **caractérisé en ce qu'**entre le boîtier de filtre (2) et la partie intérieure cylindrique (4), au moins un interrupteur de rotation (19) est agencé pour transmettre au moins une partie du flux de gaz circulant dans l'écart formé entre la face intérieure du boîtier de filtre (2) et la face extérieure de la partie cylindrique intérieure (4) si bien que l'écoulement de gaz est dévié dans une direction vers le haut et/ou vers le bas.

12. Filtre selon la revendication 11, **caractérisé en ce que** l'interrupteur de rotation (19) forme une fente ouverte vers le boîtier de filtre (2), si bien qu'il est permit aux particules qui suivent le boîtier de filtre (2) de traverser et de continuer le long d'une trajectoire hélicoïdale, de préférence vers le bas.

13. Filtre selon la revendication 11, **caractérisé en ce que** l'interrupteur de rotation (19) est pourvu d'un ou de plusieurs trous.

14. Filtre selon la revendication 11, 12 ou 13, **caractérisé en ce que** le long de la face intérieure du boîtier de filtre (2), une plaque ou un bord (20) est agencé et s'étend vers l'intérieur / vers le bas par rapport à un axe vertical passant par le centre du filtre (1).

15. Filtre selon la revendication 14, **caractérisé en ce que** la plaque ou le bord (20) s'étend le long d'au moins une portion de la face intérieure du boîtier de filtre (2).

16. Filtre selon la revendication 11, 12, 13, 14 ou 15, **caractérisé en ce qu'**à partir de l'interrupteur de rotation (19), un certain nombre de plaques (20) s'étendent autour de l'écart entre la face intérieure du boîtier de filtre ( 2) et la face extérieure de la partie cylindrique intérieure (4), lesdites plaques (20) diminuant en largeur en fonction de la distance par rapport à l'augmentation de l'interrupteur de rotation (19).

17. Filtre selon la revendication 16, **caractérisé en ce qu'**une plaque (20) est disposée au bord supérieur de l'interrupteur de rotation (19) et au bord inférieur de l'interrupteur de rotation (19).

18. Filtre selon la revendication 16 ou 17, **caractérisé en ce qu'**au moins l'une des plaques (20) s'étend le long de la circonférence de la partie cylindrique intérieure (4).

19. Filtre selon la revendication 16 ou 17, **caractérisé en ce qu'**au moins l'une des plaques (20) s'étend à l'intérieur d'un intervalle compris entre 0 et 325° le long de la circonférence de la partie cylindrique intérieure (4).

20. Filtre selon la revendication 16 ou 17, **caractérisé en ce qu'**au moins l'une des plaques (20) s'étend à l'intérieur d'un intervalle compris entre 15 et 120° le long de la circonférence de la partie cylindrique intérieure (4).

21. Filtre selon la revendication 16 ou 17, **caractérisé en ce qu'**au moins l'une des plaques (20) s'étend à l'intérieur d'un intervalle compris entre 80 et 100° le long de la circonférence de la partie cylindrique intérieure (4).
